# EUROPEAN PATENT APPLICATION

(11) **EP 3 363 406 A2**
(43) Date of publication of application: **22.08.2018**
(21) Application number: 17197115.3
(22) Date of filing: 18.10.2017
(51) Int. Cl.: A61C 8/00

(54) **DEVICE FOR INSTALLING DENTAL PROSTHESES ON IMPLANTS**

(30) Priority: 17.02.2017 IT 201700017985
(71) Applicant: Dentiat SRL, 36027 Rosa' (VI) (IT)
(72) Inventor: GOBBO, Pietro, 35013 CITTADELLA PD (IT)
(74) Representative: Modiano, Micaela Nadia

(57) **Abstract**

A device (10, 110) for installing dental prostheses with implant support in the mouth, comprising
- an abutment (11, 111), constituted by a base portion (12, 112), from which a frustum-shaped portion extends which is, as an alternative, coaxial (13) with respect to the base portion (12) or inclined (113) with respect to it,
- a sealing and gripping retention element (14, 214), which is shaped so as to be mounted on the frustum-shaped portion (13, 113),
on the retention element (14, 214) there being at least one first part (15) for snap fixing on the abutment (11) and at least one second part (16) for snap fixing, as an alternative, either to a skirt (17), which is designed to be incorporated in a dental prosthesis (18), or directly to a dental prosthesis (18).

## Description

The present invention relates to a device for installing dental prostheses with implant support in the mouth.

It is now common, in the field of dentistry, to provide dental prostheses based on the insertion in a mandibular or maxillary bone of an implant, on which a superstructure known as abutment is fitted, the actual dental prosthesis being then fixed onto said abutment.

Since practically everyone is affected sooner or later by dental problems, the market of the dental industry is expanding and evolving continuously.

The improvements in the method for the industrial production of these implant components, despite being continuous, however have not overcome important difficulties in application on the clinical level, also due to the characteristics of extreme individuality of the various problems and of the related technical solutions that can be adopted, and in fact dental prostheses are provided by involving highly specialized professionals, thus generating a high incidence of the cost of labor, in addition to the fact that the provision of the prosthesis itself depends directly on the operator.

Currently, tens of implant systems are commercially available, and the problem that arises is to know of the existence of the components and the instruments suitable for the use of each individual system and to be able to find and provide them.

Furthermore, these various implant systems differ from each other in details that cannot be perceived with the naked eye, causing serious difficulties to operators in the management of work and difficulties in communication between the operator and the patient.

In particular, systems for direct control of the configuration of the intra-bone implants for multi-implant prostheses that allow to verify directly in the mouth of the patient the correct placement of the abutments prior to the fitting of the prosthesis are currently not known.

The aim of the present invention is to provide a device for installing dental prostheses with implant support in the mouth which is capable of obviating the cited drawbacks of the background art.

Within this aim, an object of the invention is to provide a device that allows easy fitting on implants of a per se known type, even already applied to the patient, of any prosthesis according to the best-known systems for mutually fixing a prosthesis and an abutment.

Another object of the invention is to provide a device that allows the easy placement of a prosthesis regardless of the inclination of the implant in the bone of the patient.

A further object of the invention is to provide a device which, with a reduced number of components, is able to offer technical characteristics that are not inferior to those of implant technologies of the known type, and indeed combines in the same reduced number of components the best particularities of known systems.

A still further object of the present invention is to overcome the drawbacks of the background art in a manner which is alternative to any existing solutions.

This aim, as well as these and other objects which will become better apparent hereinafter, are achieved by a device for installing dental prostheses with implant support in the mouth according to claim 1, optionally provided with one or more of the characteristics of the dependent claims.

Further characteristics and advantages of the invention will become better apparent from the description of the three preferred but not exclusive embodiments of the device according to the invention, illustrated by way of non-limiting example in the accompanying drawings, wherein:
Figure 1 is a perspective view of a device according to the invention in a first embodiment thereof;
Figure 2 is a side view, taken along a longitudinal cross-section, of the device of Figure 1;
Figure 3 is a front view, taken along a further longitudinal cross-section, of the device of Figures 1 and 2;
Figure 4 is an exploded perspective view of the device of Figures 1 to 3;
Figure 5 is another exploded perspective view of the device of Figures 1 to 3;
Figure 6 is a perspective view of a device according to the invention in a second embodiment thereof;
Figure 7 is a side view, taken along a longitudinal cross-section, of the device of Figure 6;
Figure 8 is a front view, taken along a further longitudinal cross-section, of the device of Figures 6 and 7;
Figure 9 is an exploded perspective view of the device of Figures 6 to 8;
Figure 10 is a view of a detail of a device according to the invention in a third embodiment thereof;
Figure 11 is an exploded perspective view of the detail of Figure 10;
Figure 12 is a side view, taken along a longitudinal cross-section, of the device of Figure 11;
Figure 13 is a front view, taken along a further longitudinal cross-section, of the device of Figures 11 and 12.

With reference to the cited figures, the device for installing dental prostheses with implant support in the mouth according to the invention is designated generally, in its first embodiment, by the reference numeral 10.

The device 10 comprises
- an abutment 11, constituted by a base portion 12, from which a frustum-shaped portion 13 extends which is, as an alternative, coaxial with respect to a main axis X of said base portion 12 or inclined 113 with respect to it, as in the second embodiment described hereinafter;
- a sealing and gripping retention element 14, which is shaped so as to be mounted on said frustum-shaped portion 13, 113.

On the retention element 14 there are at least one first part 15 for snap fixing on said abutment 11 and at least one second part 16 for snap fixing either to a skirt 17, designed to be incorporated in a dental prosthesis 18, or directly to a dental prosthesis 18.

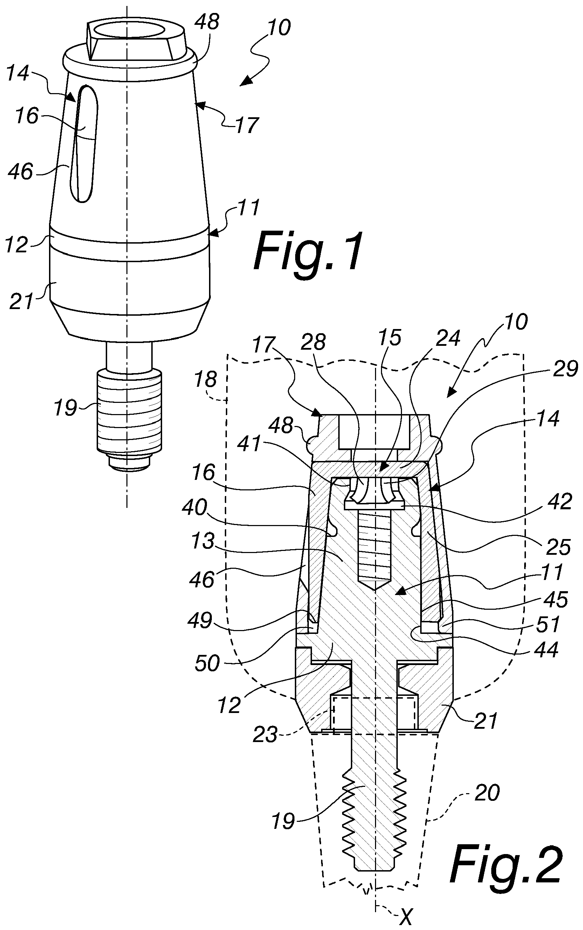

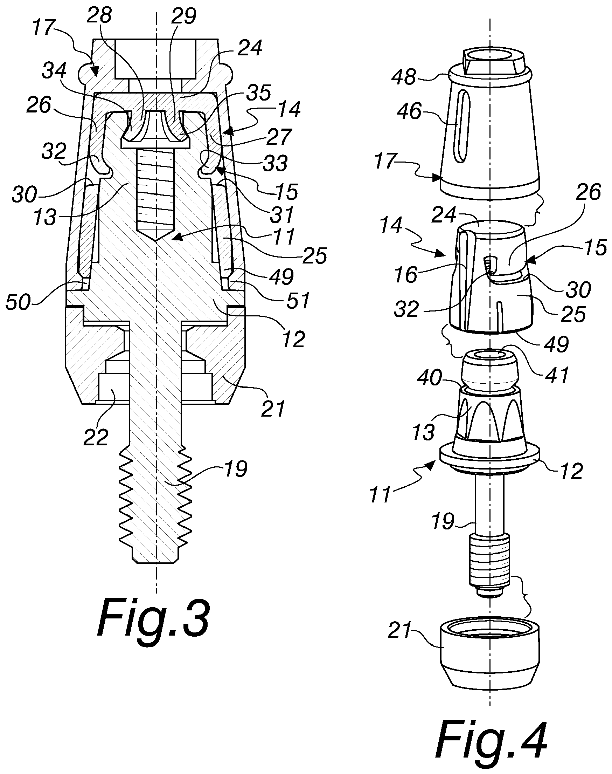

In the first embodiment of the invention, shown in Figures 1 to 4, the device 10 is provided with an abutment 11, the frustum-shaped portion 13 of which is coaxial with respect to said base portion 12, the reference sign X designating the main reference axis.

A threaded stem 19 extends from the base portion 12 on the opposite side with respect to the frustum-shaped portion 13; the threaded stem is designed for screwing to an implant body 20, which is to be understood as being of a per se known type.

In a variation of the first embodiment of the device 10, not shown for the sake of simplicity, the abutment is provided with a through hole on the axis X of said base portion, designed to allow the passage of a primary screw for fixing to the implant body 20.

A removable annular body 21 is present adjacent to the base portion 12, surrounds part of the threaded stem 19 and is provided with an axial seat 22 for engagement with a head 23 of the implant body 20.

A user can therefore choose the annular body 21 provided with the axial seat 22 that is best suited for fixing to the implant body 20 that is used; in this manner, the same device 10 can be used with various implant bodies, being highly versatile.

The retention element 14 is constituted by a cup-shaped body, which comprises a central wall 24 and a side wall 25, which are mutually monolithic.

The first part 15 for snap fixing of said retention element 14 to said abutment 11 comprises:
- two opposite lateral engagement tabs 26 and 27, which are elastically deformable and are formed on said side wall 25,
- and two central engagement tabs 28 and 29, which are elastically deformable and extend from the central wall 24 toward the inside of the retention element 14.

Each one of the lateral tabs 26 and 27 is formed in a cantilever manner in a corresponding opening 30 and 31 provided in the side wall 25 and is provided with an internal retention protrusion, respectively 32 and 33.

Each one of the central tabs 28 and 29 is provided with a shaped engagement portion 34 and 35 which is extended in a radial direction with respect to the axis X.

The abutment 11 is provided:
- with a perimetric groove 40, formed on the frustum-shaped portion 13, designed to accommodate the internal retention protrusions 32 and 33,
- an axial cavity 41, which is formed on the end of the frustum-shaped portion 13 and inside which there is an annular recess 42 that is adapted to form an undercut for the engagement of the shaped engagement portions 34 and 35 of the central tabs 28 and 29.

The frustum-shaped portion 13 is also provided with shaped centering portions 44 which are adapted to face corresponding complementarily shaped portions 45 formed inside the retention element 14.

In the embodiment of the invention described herein, by way of non-limiting example of the invention, said shaped centering portions 44 are constituted by a longitudinal groove which extends along the external surface of the frustum-shaped portion 13, said complementarily shaped portions 45 formed inside the retention element 14 being constituted by a ridge which is indeed shaped complementarily with respect to the longitudinal groove.

The abutment 11 is made of metallic material, preferably pure titanium or an alloy thereof, example Ti6Al4V, capable of giving a degree of hardness equal to 5 of the ASTMA B 265 standard.

The second snap fixing part 16 is constituted, in the present constructive non-limiting example, by a longitudinal and elastically deformable protrusion, which is extended on the outer surface of the retention element 14.

Such second part 16 is designed for insertion in a corresponding slotted opening 46 formed in the skirt 17, causing both mutual engagement of the retention element 14 and of the skirt 17 and mutual centering, i.e., correct angular positioning with respect to the reference axis X.

The skirt 17 is substantially shaped complementarily with respect to the retention element 14 and has at least one perimetric protrusion 48, or perimetric grooves, not shown in the example, for gripping the prosthesis for which it is intended.

Differently, but in a manner that is to be understood as being equivalent for the invention, the same internal shape of the skirt can be provided directly in the dental prosthesis with CAD/CAM systems.

The skirt 17 can be made of titanium or of a gold alloy or steel or rigid plastic material.

An annular interspace 50 is formed between the free edge 49 of the retention element 14 and the base portion 12 of the abutment 11 and is designed to receive in engagement a complementarily shaped internal annular protrusion 51 that is formed inside said skirt 17.

The retention element 14 is constituted by a single body made of plastic material, in particular made of a polymer having elastic characteristics, for example nylon.

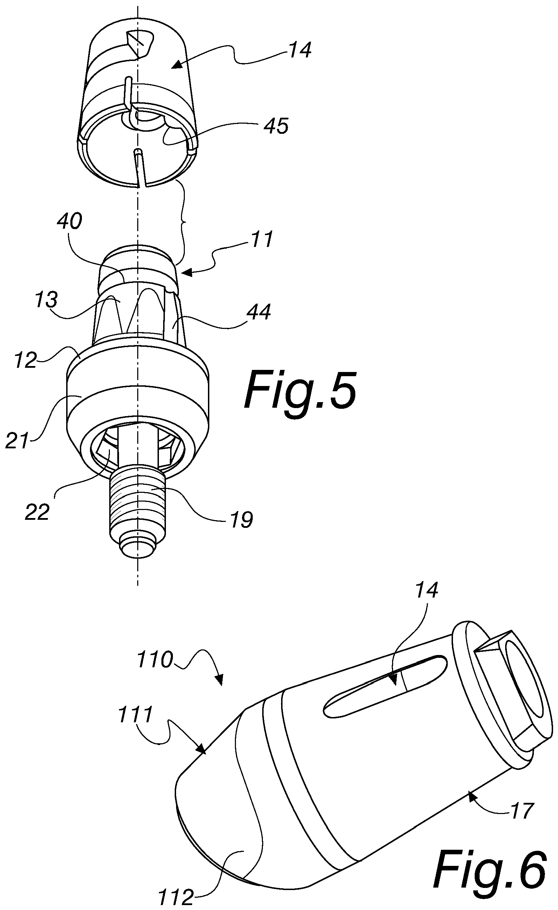

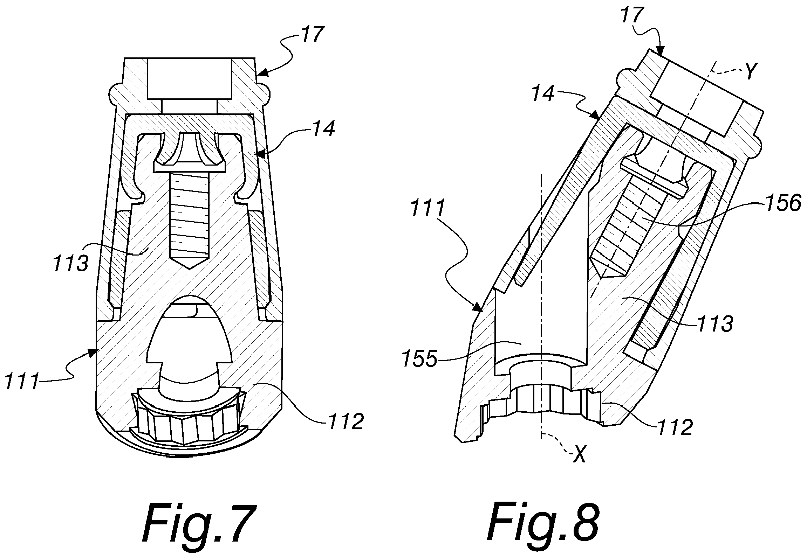

In a second embodiment of the invention, shown in Figures 6 to 9 and designated therein by the reference numeral 110, the frustum-shaped portion 113 is inclined with respect to the base portion 112 by an angle that can be selectively among a predefined number of different angles, for example 20° or 30° or 40°.

The frustum-shaped portion 113 of the abutment 111 is provided with a first through hole 155 which is coaxial to the main axis X of the base 112 for a primary screw, not shown for the sake of simplicity and to be understood as being per se known, and a second hole 156, on a secondary axis Y of said inclined frustum-shaped portion 113, for a secondary screw, also not shown and to be understood as being of a known type.

The frustum-shaped portion 113 is substantially identical to the above described frustum-shaped portion 13 of the device 10 in its first embodiment described above.

The retention element 14 and the skirt 17 are identical with respect to the device 10 in its first embodiment described above.

The operation of the device 10 and 110 is as follows.

In order to fit the retention element 14 on the frustum-shaped portion 13 or 113, the retention element 14 is arranged on said frustum-shaped portion 13 or 113 so that the ridge that forms the complementarily shaped centering portion 45 is located at the longitudinal groove that forms the shaped centering portion 44.

By applying a thrust in an axial direction, one acts so that
- the two opposite lateral engagement tabs 26 and 27, formed on said side wall 25, are deformed elastically until the internal retention protrusions 32 and 33 engage the perimetric groove 40, which is formed on the frustum-shaped portion 13, with elastic return of the lateral tabs 26 and 27 to the configuration that is not elastically deformed or partially elastically deformed,
- and the two central engagement tabs 28 and 29, which extend from the central wall 24, are deformed elastically until their shaped engagement portions 34 and 35 engage the undercut formed by the annular recess 42 of the axial cavity 41, with consequent elastic return of the lateral tabs 26 and 27 to the configuration that is not elastically deformed or partially elastically deformed.

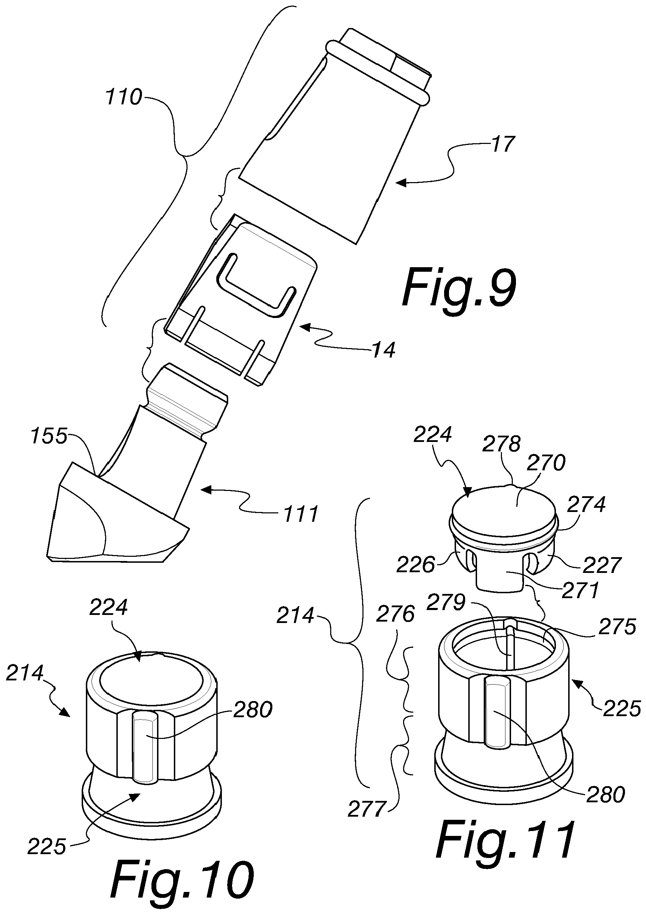

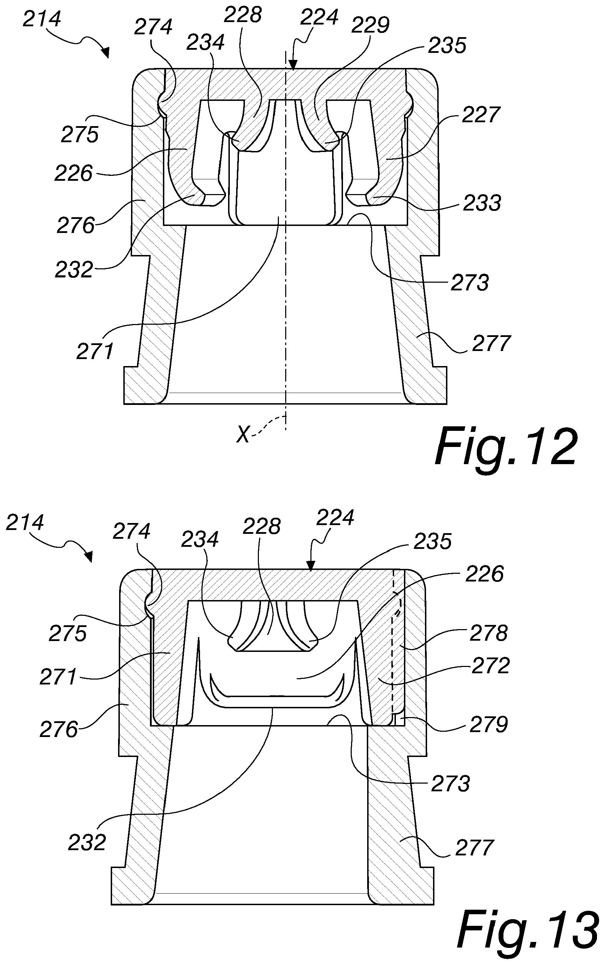

Figures 10 to 13 show a device according to the invention in a third embodiment, the retention element of which is designated by the numeral 214.

The retention element 214 is constituted by a cup-shaped body, which comprises a central wall 224 and a side wall 225, said central wall 224 and said side wall 225 being each constituted by an independent component, and joined by virtue of interlocking coupling means.

The central wall 224 is constituted by a disk-like body 270, from which there protrude
- two opposite lateral engagement tabs 226 and 227, which are elastically deformable and extend from the edge of the disk-like body 270,
- and two central engagement tabs 228 and 229, which are elastically deformable and extend toward the inside of the retention element 214,
   in a manner similar to what has been described above for the retention element 14 of the first embodiment of the device 10.

Each one of the lateral tabs 226 and 227 is formed in a cantilever manner and is provided with an internal retention protrusion, respectively 232 and 233.

Each one of the central tabs 228 and 229 is provided with a shaped engagement portion 234 and 235 which is extended in a radial direction with respect to the axis X.

Two resting tabs, respectively 271 and 272, are extended in the direction of the axis X between the lateral tabs 226 and 227 from the edge of the disk-like body 270 and are designed to encounter an internal positioning shoulder 273 formed inside the side wall 225.

In the present constructive example, the interlocking coupling means are constituted by a perimetric annular protrusion 274 that is extended from the edge of the disk-like body 270 of the central wall 224 and is designed to enter a corresponding internal annular recess 275 that is formed inside the inlet of the side wall 225.

The side wall 225 comprises two portions which are mutually contiguous in an axial direction, a first portion 276 having a substantially cylindrical shape and a second portion 277 which is frustum-shaped.

The positioning shoulder 273 is formed internally in the connection region 278 between these two parts.

The central wall 224 is provided, at at least one of its resting tabs 271 and 272, with a longitudinal ridge 278 for centering with respect to the side wall 225 during assembly, inside the side wall 225 there being a complementarily shaped longitudinal groove 279 that is adapted to accommodate said longitudinal ridge 278.

Externally to the side wall 225 there is at least one centering protrusion 280 in order to allow the correct angular positioning of the retention element 214 with respect to a prosthesis in which it is to be inserted.

The central wall 224 is made of plastic material, for example nylon.

The side wall 225 is also made of plastic material, for example nylon.

The central wall 224 and the side wall 225 are preassembled during production and form a retention element 214 which is useful if a prosthesis technician prefers to have a grip system that is less rigid and in which the plastic component integrally wraps around the abutment 11 or 111, which instead remains unchanged in shape and dimensions as described above.

Said retention element 214 lends itself in particular to be used without a skirt 17, as instead occurs for the first embodiments of the device 10 and 110.

Since in the prosthetic and dental field resorting to CAD/CAM technology occurs because of the speed of execution of the articles and since, combined with the use of intraoral digital impressions, it is possible to generate digital prosthetic projects which can be easily personalized and are of satisfactory quality, the invention provides a device 10 and 110 and a retention element 214 which are capable of adopting this work method, providing a retention element 14 and 214 that can be inserted in prostheses obtained by CAM machining or manufactured with SLS (Laser Sintering) technology.

These methods, applied to the dental sector, allow the reproduction of precision components in an innovative manner, are able to reproduce precisely medical devices that have an assured shape and whose mathematical dimensions are known, integrating them in the personalized prosthetic structure, i.e., prototyped for the individual patient.

The retention element 14 and 214, made of polyamide 12, or of high-performance nylon, for retention with a skirt in the case of the retention element 14 and for retention without a skirt in the case of the retention element 214 of the third embodiment, may be used in combination with the described prototyping methods by simple insertion, i.e., assembly, with the finished prosthetic article if it requires processes at high temperatures for curing the coating acrylics or high temperatures for sintering the aesthetic ceramics, which otherwise would destroy the nylon retention element 14 and 214 during normal processing cycles.

The retention element 214 can be inserted by snap action in the provided seat of the prosthesis, which will have the same dimensions and internal shape as a skirt.

The retention element 214 remains in the seat for retention within the recess provided in the prosthetic structure, as if it were a prefabricated metallic skirt.

In the case instead of the device to be used without a skirt, i.e., with the retention element 214, the provision in the supporting structure to accommodate the latter occurs in the same manner cited above (see CAM milling or SLS prototyping method), with the only difference that insertion, positioning and orientation occur with the aid of the centering protrusion 280, while retention within the prosthetic structure is obtained by adhesive bonding with composite adhesive or acrylate cements already in use in the dental sector, allowing grip on the abutment with the retention element 214, but with a contact entirely made of plastic material which acts as a shock absorber between the abutment 11 or 111 and the overlying prosthesis.

Various anchoring options for different prosthetic solutions are thus available which might, during design and production in the laboratory, become necessary following assessments on the patient of the biomechanical mastication and aesthetic functions and of the daily and professional hygiene practices.

With a device comprising an abutment, a retention element and a skirt it is possible to provide a dental lab with prefabricated components which can be embedded in the prostheses with handcrafted methods or directly in the dental clinic.

With a device comprising an abutment, a retention element but without a skirt, the prosthesis is provided by means of CAD/CAM or prototyping systems and the external geometric mathematics are made available so that the laboratory can generate the seat for the engagement of the retention element on the prosthetic structure, which can be inserted in the laboratory or optionally be removed and replaced periodically in the clinic during periodic hygiene sessions.

With an assembly entirely made of plastic, the external geometric mathematics of the two parts 224 and 225 of the retention element 214, which are preassembled, are made available to a laboratory so that it is possible to create the seat for the accommodation and subsequent adhesive bonding to the prosthesis, which can be inserted in a clinic and/or optionally be removed and replaced periodically during periodic hygiene sessions.

In practice it has been found that the invention achieves the intended aim and objects.

In particular, the invention provides a device that allows easy fitting on implants of a per se known type, even already applied to the patient, of any prosthesis according to the best-known systems for fixing between the prosthesis and the abutment.

Furthermore, the invention provides a device that allows easy positioning of a prosthesis regardless of the inclination of the implant in the bone of the patient.

Furthermore, the invention provides a device which, with a reduced number of components, is capable of offering technical characteristics that are not inferior to implant technologies of the known type and indeed combines in the same reduced number of components the best particularities of known systems.

The invention thus conceived is susceptible of numerous modifications and variations, all of which are within the scope of the appended claims; all the details may further be replaced with other technically equivalent elements.

In practice, the components and the materials used, so long as they are compatible with the specific use, as well as the contingent shapes and dimensions, may be any according to the requirements and the state of the art.

The disclosures in Italian Patent Application No. 102017000017985 (UA2017A001016) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10, 110) for installing dental prostheses with implant support in the mouth, **characterized in that** it comprises
- an abutment (11, 111), constituted by a base portion (12, 112), from which a frustum-shaped portion extends which is, as an alternative, coaxial (13) with respect to a main axis (X) of said base portion (12) or inclined (113) with respect to it,
- a sealing and gripping retention element (14, 214), which is shaped so as to be mounted on said frustum-shaped portion (13, 113),
on said retention element (14, 214) there being at least one first part (15) for snap fixing on said abutment (11) and at least one second part (16) for snap fixing, as an alternative, either to a skirt (17), which is designed to be incorporated in a dental prosthesis (18), or directly to a dental prosthesis (18).

2. The device according to claim 1, **characterized in that** a threaded stem (19) preset for screwing to an implant body (20) extends from the base portion (12) on the opposite side with respect to the frustum-shaped portion (13).

3. The device according to one or more of the preceding claims, **characterized in that** adjacent to the base portion (12) there is a removable annular body (21), which surrounds part of the threaded stem (19) and is provided with an axial seat (22) for engagement with a head (23) of the implant body (20).

4. The device according to one or more of the preceding claims, **characterized in that** said retention element (14) is constituted by a cup-shaped body, which comprises a central wall (24) and a side wall (25), which are mutually monolithic.

5. The device according to one or more of the preceding claims, **characterized in that** said at least one first part (15) for snap fixing of said retention element (14) to said abutment (11) comprises:
- two opposite lateral engagement tabs (26, 27), which are elastically deformable and are formed on said side wall (25),
- and two central engagement tabs (28, 29), which are elastically deformable and extend from the central wall (24) toward the inside of the retention element (14).

6. The device according to one or more of the preceding claims, **characterized in that** each one of the lateral tabs (26, 27) is formed in a cantilever arrangement in a corresponding opening (30, 31) provided on the side wall (25) and has an internal retention protrusion (32, 33).

7. The device according to one or more of the preceding claims, **characterized in that** each one of the central tabs (28, 29) has a shaped engagement portion (34, 35) which is extended in a radial direction with respect to the axis (X).

8. The device according to one or more of the preceding claims, **characterized in that** said abutment (11) has:
- a perimetric groove (40), which is formed on the frustum-shaped portion (13) and is designed to accommodate the internal retention protrusions (32, 33),
- an axial cavity (41), which is formed on the end of the frustum-shaped portion (13), inside which there is an annular recess (42) that is adapted to form an undercut for the engagement of the shaped engagement portions (34, 35) of the central tabs (28, 29).

9. The device according to one or more of the preceding claims, **characterized in that** said first frustum-shaped portion (13) is provided with shaped centering portions (44) which are adapted to face corresponding complementarily shaped portions (45) which are formed inside the retention element (14).

10. The device according to one or more of the preceding claims, **characterized in that** said second snap fixing part (16) is constituted by a longitudinal protrusion that extends on the outer surface of the retention element (14), said second part (16) being designed for insertion in a corresponding slotted opening (46) formed in the skirt (17).

11. The device according to one or more of the preceding claims, **characterized in that** said retention element (214) is constituted by a cup-shaped body, which comprises a central wall (224) and a side wall (225), said central wall (224) and said side wall (225) being each constituted by a separate component and being joined by virtue of interlocking joining means.

12. The device according to one or more of the preceding claims, **characterized in that** said central wall (224) is constituted by a disk-like body (270), from which there extend:
- two opposite lateral engagement tabs (226, 227), which are elastically deformable and extend from the edge of the disk-like body (270),
- and two central engagement tabs (228, 229), which are elastically deformable and extend toward the inside of the retention element (214).

13. The device according to one or more of the preceding claims, **characterized in that** two resting tabs (271, 272) extend in the direction of the axis (X) between the lateral tabs (226, 227) from the edge of the disk-like body (270) and are designed to encounter an internal positioning shoulder (273) formed inside the side wall (225).

14. The device according to one or more of the preceding claims, **characterized in that** said side wall (225) comprises two portions which are mutually contiguous in an axial direction, a first portion (276) with a substantially cylindrical shape and a second portion (277) with a frustum-like shape.

15. The device according to one or more of the preceding claims, **characterized in that** said central wall (224) has, at at least one of its resting tabs (271, 272), a longitudinal ridge (278), for centering with respect to the side wall (225) during assembly, inside the side wall (225) there being a complementarily shaped longitudinal groove (279) which is adapted to accommodate said longitudinal ridge (278).
